## Europäisches Patentamt

## European Patent Office

## Office européen des brevets

(19)

(11) Veröffentlichungsnummer: **0 033 489**
**A1**

(12) **EUROPÄISCHE PATENTANMELDUNG**

(21) Anmeldenummer: **81100465.4**

(22) Anmeldetag: **22.01.81**

(51) Int. Cl.³: **B 29 C 17/07**

(30) Priorität: **22.01.80 DE 3002192**
**16.09.80 DE 3034919**

(43) Veröffentlichungstag der Anmeldung:
**12.08.81 Patentblatt 81/32**

(84) Benannte Vertragsstaaten:
**AT CH FR GB IT LI**

(71) Anmelder: **Frohn, Walter Dr.-Ing.**
**Geiselgasteigstrasse 100**
**D-8000 München 90(DE)**

(72) Erfinder: **Frohn, Walter Dr.-Ing.**
**Geiselgasteigstrasse 100**
**D-8000 München 90(DE)**

(74) Vertreter: **Lamprecht, Helmut, Dipl.-Ing.**
**Corneliusstrasse 42**
**D-8000 München 5(DE)**

(54) **Maschine zur Herstellung geblasener Kunststoff-Hohlkörper.**

(57) Eine Maschine zum Blasen von Kunststoffhohlkörpern mit einer auf und ab beweglichen Blasformschließeinheit (10; 110) und einer Hauptantriebswelle (32), welche durch einen intermittierenden Antrieb in einzelnen aufeinanderfolgenden Antriebsperioden mit exakt gleichem Drehwinkel antreibbar ist, während ihre Stillstandsphasen durch ein einstellbares Zeitglied steuerbar sind, wobei die Hubbewegung der Blasformschließeinheit über einen im Zwanglauf arbeitenden, in sich geschlossenen Kurventrieb (36, 38; 220, 226) von der Hauptantriebswelle (32) abgeleitet wird, der während einer Antriebsperiode seinen Zyklus einmal vollendet und dessen Kurve Kurvenabschnitte gegenläufiger Steigung zum Heben und Senken der Blasformschließeinheit (10; 110) und zwischen diesen Kurvenabschnitten jeweils Abschnitte mit der Steigung NULL aufweist, und wobei zur Entlastung des Kurventriebs das Gewicht der Blasformschließeinheit durch eine hydropneumatische Ausgleichsvorrichtung (70, 80, 84; 164) abgestützt sein kann.

Fig.6

- 1 -

--------------------------------------------------

Maschine zur Herstellung geblasener Kunststoff-Hohlkörper

--------------------------------------------------

Die Erfindung betrifft eine Maschine zur Herstellung geblasener Kunststoff-Hohlkörper mit einer Abgabevorrichtung für einen Vorformling, insbesondere zur Abgabe über einen Extruderkopf, mit einer durch einen Hubantrieb zwischen einer oberen, unterhalb der Abgabevorrichtung befindlichen Vorformling-Übergabeposition und einer unteren, gegenüber der Übergabeposition abgesenkten Blasposition bewegbaren Blasformschließeinheit.

Maschinen dieser Art sind in sehr verschiedenartigen Bauformen bekannt. Dabei sind neben der erwähnten Heb- und Senkbewegung der Blasformschließeinheit bekanntlich noch zahlreiche weitere Bewegungsvorgänge vorhanden, so z.B. das
Öffnen und Schließen der Formen, die Bewegung des Blasdorns
in die geschlossene Form und nach Abschluß des Blasvorgangs
aus dieser zurück, sowie gegebenenfalls Bewegungsabläufe bei
der positionierten Entnahme der geblasenen Hohlkörper aus der
Form und bei ihrer Überführung in Nachbehandlungsvorrichtungen,
z.B. einer Entgratungsvorrichtung, einer Dichtheitsprüfung,
usw., wie auch die Betätigung dieser Vorrichtungen.

Alle diese Bewegungen müssen innerhalb eines Bewegungszyklus
exakt aufeinander abgestimmt und mit konstanter Wiederkehr
stattfinden. Dabei ist schon mit Rücksicht auf den kontinuierlich arbeitenden Extruder die Summe der Nebenzeiten möglichst
gering zu halten, um die Blasform möglichst rasch wieder in
die Übergabeposition bewegen zu können. Dies führt zum Auftreten hoher Beschleunigungs- und Verzögerungswerte, wobei
jede einzelne Bewegung im Beschleunigungs- und Verzögerungsverlauf konstant gehalten werden muß. Erschwerend kommt hinzu, daß von diesen hohen Geschwindigkeiten Beschleunigungen
und Verzögerungen teilweise beträchtliche Massen betroffen
sind, wie z.B. insbesondere die Blasformschließeinheit.

Man hat versucht, für derartige Maschinen einen hydraulischen
Antrieb vorzusehen, dabei muß die Temperatur des hydraulischen
Mediums konstant gehalten werden, um die Viskosität konstant
zu halten und damit wiederum eine konstante Wiederkehr der
Arbeitspositionen und der Beschleunigungs- und Verzögerungswerte zu erreichen. Trotzdem kann auf eine Überwachung der
einzelnen Schritte mittels einer Vielzahl von Fühlern, Endschaltern und dergleichen nicht verzichtet werden, so daß
sich insgesamt ein sehr großer Bauaufwand mit einer der
Kompliziertheit entsprechenden Störanfälligkeit ergibt. Im
Interesse der Betriebssicherheit können voneinander abhängige
Arbeitsschritte häufig erst eingeleitet werden, wenn durch
entsprechende Überwachungseinrichtungen angezeigt wird, daß
der vorangehende Arbeitsschritt programmgemäß vollendet ist,
wodurch sich eine zusätzliche Belastung der Nebenzeiten ergibt.

Das ständige Beschleunigen und Abbremsen großer Massen führt
zu einem hohen Anfall an Verlustwärme, so daß derartige
Maschinen den heutigen Anforderungen an einen sparsamen
Energieeinsatz nicht gerecht werden.

Durch die schnellen Bewegungen werden die hydraulischen bzw.
pneumatischen Einrichtungen einem hohen Verschleiß unterworfen.

Der Erfindung liegt die Aufgabe zugrunde, eine Maschine der
eingangs erwähnten Art so auszugestalten, daß bei Verringerung des gesamten Bauaufwands die Massenkräfte verringert und sicher beherrschbar werden, wobei zugleich der
Energieaufwand gesenkt und die Arbeitsgenauigkeit verbessert
werden soll.

Die Lösung dieser Aufgabe besteht darin, daß eine Hauptantriebswelle durch einen intermittierenden Antrieb in
einzelnen Antriebsperioden mit jeweils exakt gleichem

- 4 -

Drehwinkel antreibbar ist und die Stillstandsphasen von einem
einstellbaren Zeitglied steuerbar sind, daß der Hubantrieb
als im Zwanglauf arbeitender, in sich geschlossener Kurventrieb ausgebildet und von der Hauptantriebswelle derart abgeleitet ist, daß während einer Antriebsperiode der Hubtrieb seinen Zyklus einmal vollendet, und daß die Kurve des
Hubantriebs zwischen den das Heben und Senken der Blasformschließeinheit bewirkenden Kurvenabschnitten gegenläufiger
Steigung jeweils Abschnitte mit der Steigung Null aufweist.

Da durch einen Kurventrieb der Geschwindigkeits- bzw. Beschleunigungs- und Verzögerungsverlauf mit mathematisch
berechenbarer und fertigungstechnisch realisierbarer Genauigkeit und bei weitgehendem Ausschluß von durch Spiel
bedingten Ungenauigkeiten beherrscht werden kann, können
durch einen solchen Antrieb die Beschleunigungs- und Verzögerungswerte optimal gestaltet und damit die Massenkräfte
auf das geringstmögliche Maß reduziert werden, wodurch sich
insbesondere auch ein weitgehend schwingungsfreier Antrieb
ergibt. Hierdurch können beachtliche Einsparungen bei dem
der Stabilität dienenden Bauaufwand erzielt werden. Da der
kurvenabhängige Zwanglauf die genaueste Einhaltung der vorgegebenen Positionen bei genauester Wiederkehr ermöglicht,
können zusätzliche Steuerungs- und Überwachungseinrichtungen
entfallen. Der kurvenabhängige Zwanglauf ermöglicht es
außerdem, weitere Bewegungsabläufe über synchron arbeitende
Kurventriebe abzuleiten und mit diesen Bewegungsabläufen in
zeitlicher Überschneidung zu arbeiten, d.h. es können durch
teilweise Überdeckung Nebenzeiten verkürzt werden.

Es ist zwar bereits bekannt, bei einer Kunststoff-Blasmaschine eine Hubbewegung durch eine Exzenterkurve abgeleitet von einer Hauptantriebswelle zu erzeugen. Bei dieser bekannten Maschine wird ein um eine vertikale Achse schrittweise zwischen aufeinanderfolgenden Arbeitspositionen angetriebener, im Abstand der Arbeitspositionen mehrere Blasformschließeinheiten tragender Drehtisch abgeleitet von einer ständig mit gleichbleibender Geschwindigkeit angetriebenen Hauptantriebswelle über eine Exzenterkurve und einen mit dieser Exzenterkurve zusammenwirkenden Schwinghebel in eine kontinuierlich auf und abgehende Schwingbewegung versetzt, wobei in der obersten Position des Drehtellers die Schlauchübernahme vom Extruder erfolgt, während mit der anschließenden Periode der Schwingbewegung zugleich eine Winkelbewegung des Drehtisches in die nächste Arbeitsposition erfolgt, so daß eine weitere Blasformschließeinheit in die Schlauchübernahmeposition bewegt wird. Jeder Blasformschließeinheit ist auf dem Drehtisch ein gesonderter Blasdorn zugeordnet, so daß der Blasvorgang erfolgt, während der Drehtisch seine Schwingbewegung und seine schrittweise Winkelbewegung fortsetzt. Je nach Art des hergestellten Hohlkörpers und des verwendeten Materials sind unterschiedliche Kühlzeiten erforderlich. Die Betriebsweise der bekannten Maschine mit einer kontinuierlichen Schwingbewegung des Drehtisches ist deshalb nur mit mehreren aufeinanderfolgend eingesetzten Blasformschließeinheiten möglich, weil so mehrere aufeinanderfolgende Taktschritte des Drehtisches für die Kühlzeit ausnützbar sind. Trotzdem werden die wenigen für die Kühlzeit zur Verfügung stehenden Taktschritte nicht in allen Fällen ausreichend sein, so daß die erforderliche Kühlzeit nur dadurch erhalten werden kann, daß man die Taktzeit des Drehtisches verlängert. Dies kann nur in der Weise geschehen, daß man die Drehzahl der Hauptantriebswelle entsprechend reduziert.

Diese Verringerung der Geschwindigkeit der Hauptantriebswelle hat aber zur Folge, daß sich alle von der Hauptantriebswelle abgeleiteten Bewegungen verzögern, also in unerwünschter Weise auch die Nebenzeiten. Dies beeinträchtigt die wirtschaftliche Betriebsweise der Maschine.

Insbesondere für eine Kunststoffblasmaschine mit nur einer einzigen Blasformschließeinheit ist das Antriebssystem der bekannten Maschine überhaupt nicht verwendbar.

Demgegenüber bietet die erfindungsgemäße Konstruktion den Vorteil, daß praktisch alle Bewegungsabläufe zeitlich genau synchronisierbar sind, weil die von der Form des Hohlkörpers und dessen Material abhängige Kühlzeit durch ein Zeitglied genau einstellbar ist und während dieser Kühlzeit die Hauptantriebswelle stillgesetzt ist. Es wird somit insbesondere für Kunststoffblasmaschinen mit nur einer einzigen Blasformschließeinheit ein äußerst präzise arbeitender, die Massenkräfte voll beherrschender, schwingungsarmer Antrieb geschaffen, der wegen der möglichen Verkürzung der Nebenzeiten eine besonders wirtschaftliche Arbeitsweise ermöglicht und der zudem durch die genau beherrschten Beschleunigungen und Verzögerungen in Abhängigkeit von

- 7 -

Steuerkurven den Aufwand für die Überwachung und Steuerung
der Bewegungsvorgänge stark reduziert, wobei zugleich durch
die Verringerung der Massenkräfte eine leichtere und damit
kostengünstigere Bauweise möglich ist.

Eine besonders zweckmäßige Ausgestaltung besteht dabei darin,
daß das Gewicht der Blasformschließeinheit über eine hydropneumatische Ausgleichsvorrichtung abgestützt wird, was eine
weitere Einsparung an Antriebsenergie und einen weiteren Fortschritt in Richtung auf eine Leichtbauweise ermöglicht.

Eine andere vorteilhafte Ausführungsform besteht darin,
daß eine zweite Kurve synchron mit der Kurve des Hubantriebs antreibbar ist, daß mit dieser zweiten Kurve ein
Steuergetriebe für ein an der Blasdorn-Schließeinheit
angeordnetes Stellgetriebe zum Öffnen und Schließen der
Blasform in Eingriff steht, daß die beiden Kurven derart
aufeinander und auf das Steuergetriebe abgestimmt sind,
daß die Abgangseite des Steuergetriebes auf einer Bahn
geführt ist, die sich aus einem ersten, mit der Hubbewegung der Blasformschließeinheit übereinstimmenden,
in Bezug auf die Betätigung des Stellgetriebes neutralen
Anteil und einem zweiten, diesen ersten Anteil überlagernden, das Stellgetriebe entsprechend den gewünschten
Öffnung- und Schließpunkten synchron zur Hubbewegung
steuernden Anteil zusammensetzt, und daß zwischen dem
Stellgetriebe und der Hauptantriebswelle über das Steuergetriebe und die zweite Kurve eine Zwanglaufverbindung
besteht.

Durch diese Konstruktion wird erreicht, daß abgeleitet von der an der Hubbewegung der Blasformschließeinheit nicht teilnehmenden zweiten Kurve der auf das Stellgetriebe einwirkende Ausgang des Steuergetriebes eine aus zwei Bewegungen zusammengesetzte Bewegung ausführt, deren erster Bewegungsteil parallel mit der Hub- und Senkbewegung der Blasformschließeinheit verläuft und somit auf die Funktion des Stellgetriebes keinen Einfluß ausübt, so daß dieses seinen Zustand entsprechend der geöffneten oder geschlossenen Blasformschließeinheit beibehält, während der zweite Bewegungsanteil eine Betätigung des Stellgetriebes hervorruft und dieses aus der der geöffneten Blasform entsprechenden Stellung in die der geschlossenen Blasform entsprechende Stellung überführen kann und umgekehrt. Da die zweite Kurve synchron mit der Kurve des Hubantriebs umläuft, wird das Öffnen und das Schließen der Blasformschließeinheit zwangsläufig genau zu jenen Zeitpunkten des Maschinenzyklus durchgeführt, die für eine optimale Funktion vorher festgelegt worden sind. Weil auch die Öffnungs- und Schließbewegung der Blasformschließeinheit im Zwanglauf von der Hauptantriebswelle abgeleitet wird, können Überwachungseinrichtungen wie Endschalter oder dgl. entfallen. Durch den rein mechanischen Antrieb entfallen die hohen Aufwendungen für den bisher üblichen Hydraulikantrieb, außerdem ist eine absolute Wiederhol-Genauigkeit ohne zusätzlichen Aufwand gewährleistet, wodurch sich auch die Lebensdauer der Maschine vorteilhaft verändert.

Eine besonders vorteilhafte Ausgestaltung besteht darin,
daß die Kurve des Hubantriebs und die zweite Kurve jeweils auf einer Stirnseite einer gemeinsamen Kurvenscheibe ausgebildet sind, so daß sich eine auch durch
Montageungenauigkeiten nicht zu beeinträchtigende
Synchronisation zwischen dem Hubantrieb einerseits und
der Steuerung der Schließ- und Öffnungsbewegung andererseits ergibt.

Weitere vorteilhafte Ausgestaltungen der Erfindung ergeben
sich aus den Unteransprüchen.

Anhand der nun folgenden Beschreibung eines in der Zeichnung
dargestellten Ausführungsbeispiels der Erfindung wird diese
näher erläutert.

Es zeigt:

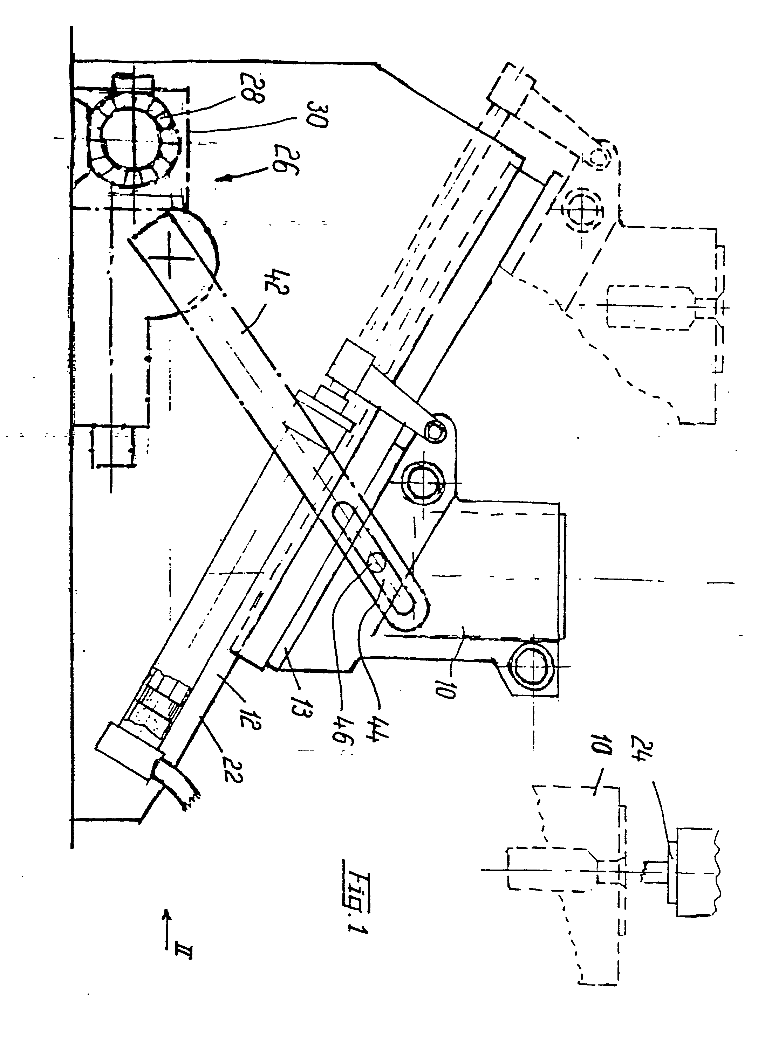

Fig. 1    eine schematische Seitenansicht einer auf einer
          Schrägführung linear beweglichen Blasformschließeinheit mit der zugehörigen Antriebsvorrichtung,
          wobei die obere Endstellung der Blasformschließeinheit in unterbrochenen Linien einerseits im
          Bereich der Schrägführung und seitlich und in der
          Höhe versetzt zur Darstellung des Extruderkopfes
          in der rechten Hälfte der Figur nochmals gesondert
          gezeigt ist,

Fig. 2    eine schematische Ansicht in Richtung des Pfeils
          II in Fig. 1,

Fig. 3    eine schematische Ansicht der hydropneumatischen
          Gewichtsausgleichvorrichtung,

Fig. 4      eine schematische Darstellung des Schwenktriebs,

Fig. 5a    eine schematische Darstellung eines Kurventriebs
           für  eine Entnahmevorrichtung,

Fig. 5b    eine teilweise geschnittene Seitenansicht des

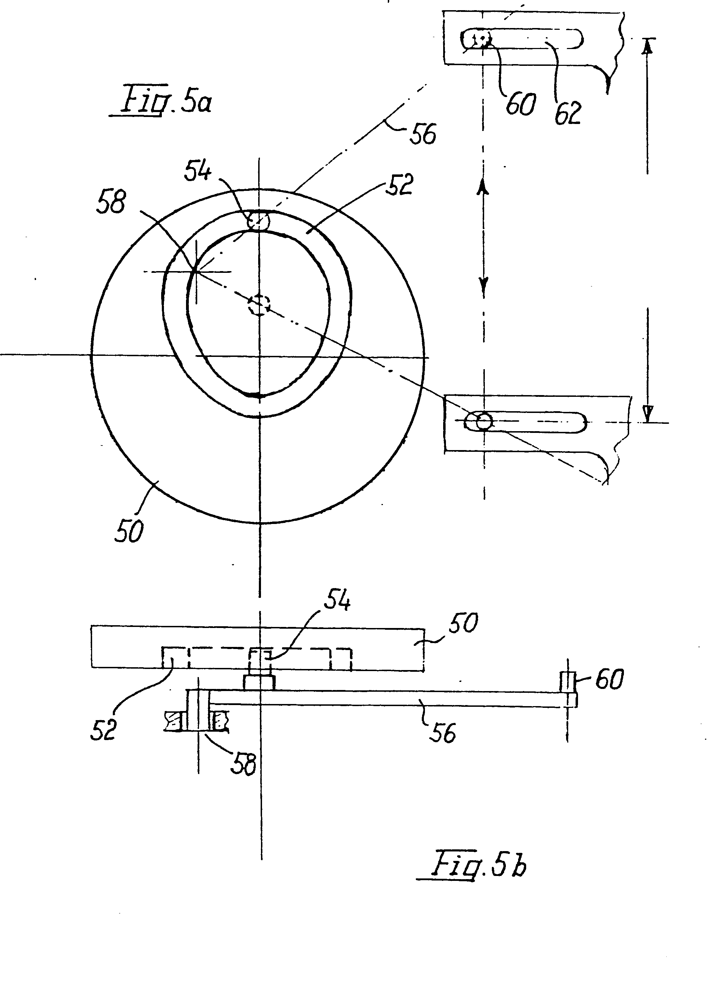

           in Fig. 5a gezeigten Antriebs und

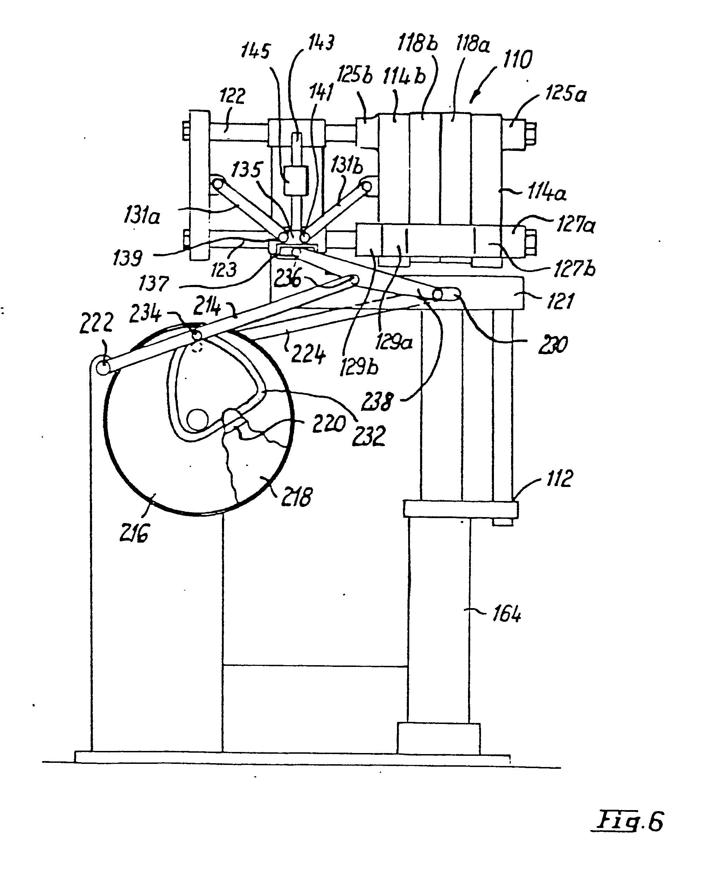

Fig. 6     in schematischer Darstellung eine Seitenansicht
           auf eine heb- und senkbare Blasformschließeinheit,

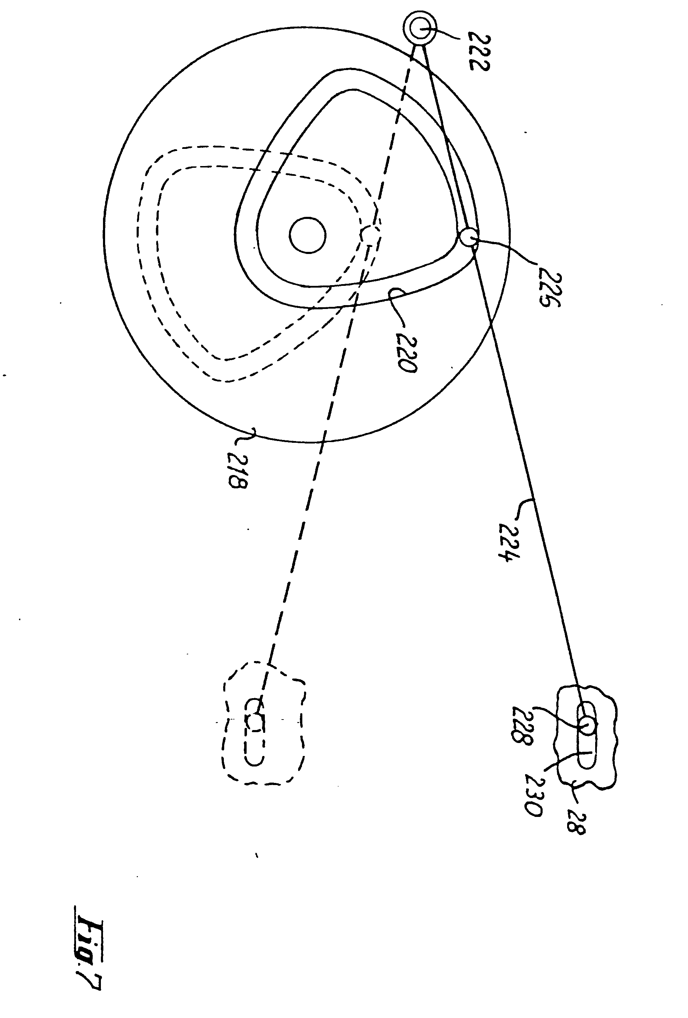

Fig. 7     in schematischer Darstellung den Antrieb zum
           Heben und Senken der Blasformschließeinheit,

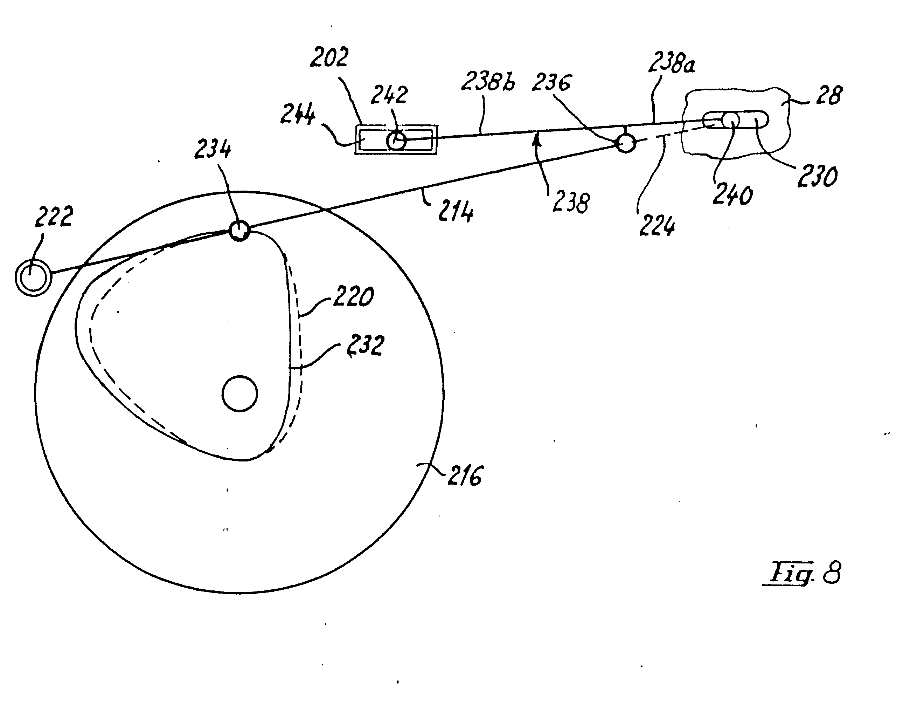

Fig. 8     in einer der Fig. 7 entsprechenden Darstellungsweise den mechanischen Antrieb für die Öffnungs-
           und Schließbewegung der Blasformschließeinheit
           bei angehobener, noch geöffneter Blasformschließeinheit,

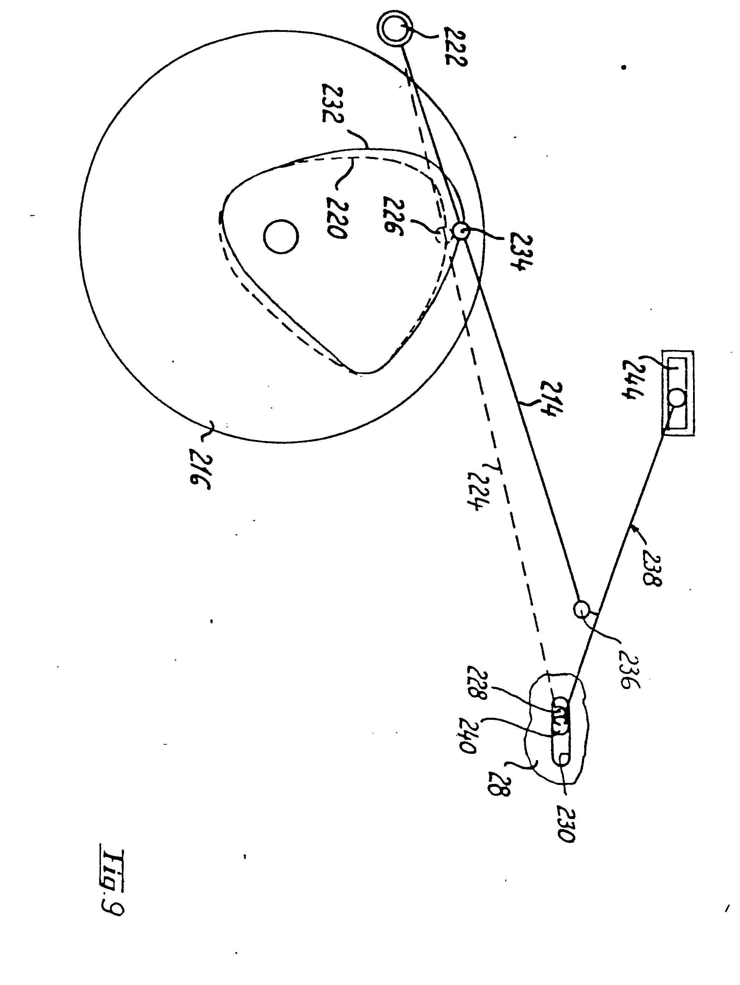

Fig. 9     eine der Fig. 8 entsprechende Darstellung in
           der oberen Stellung der Blasformschließeinheit,
           jedoch in geschlossenem Zustand,

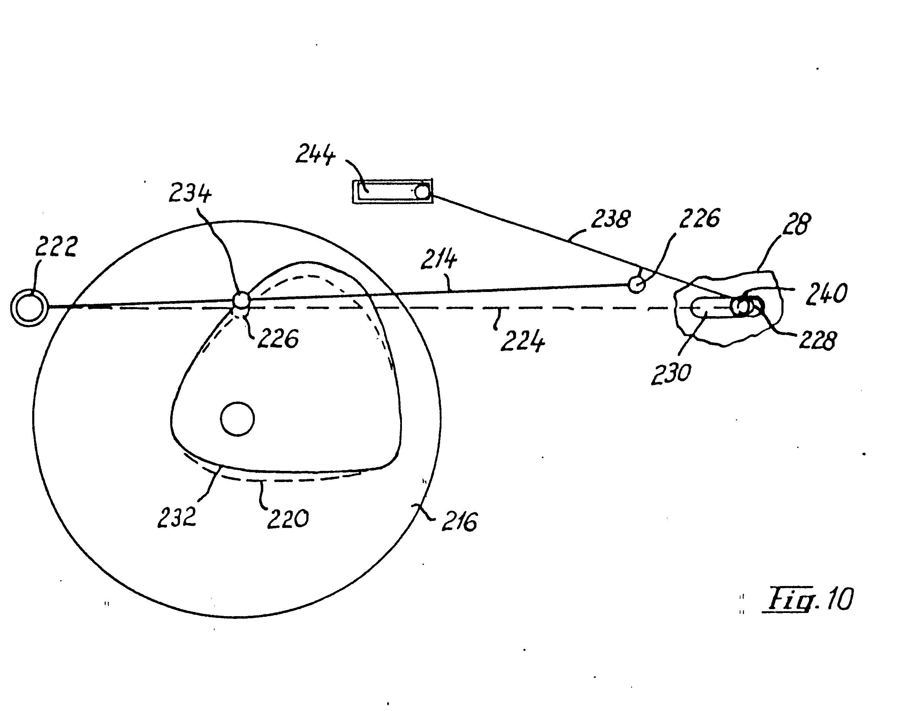

Fig. 10    eine der Fig. 8 entsprechenden Darstellung
           während der Senkbewegung der Blasformschließeinheit in geschlossenem Zustand,

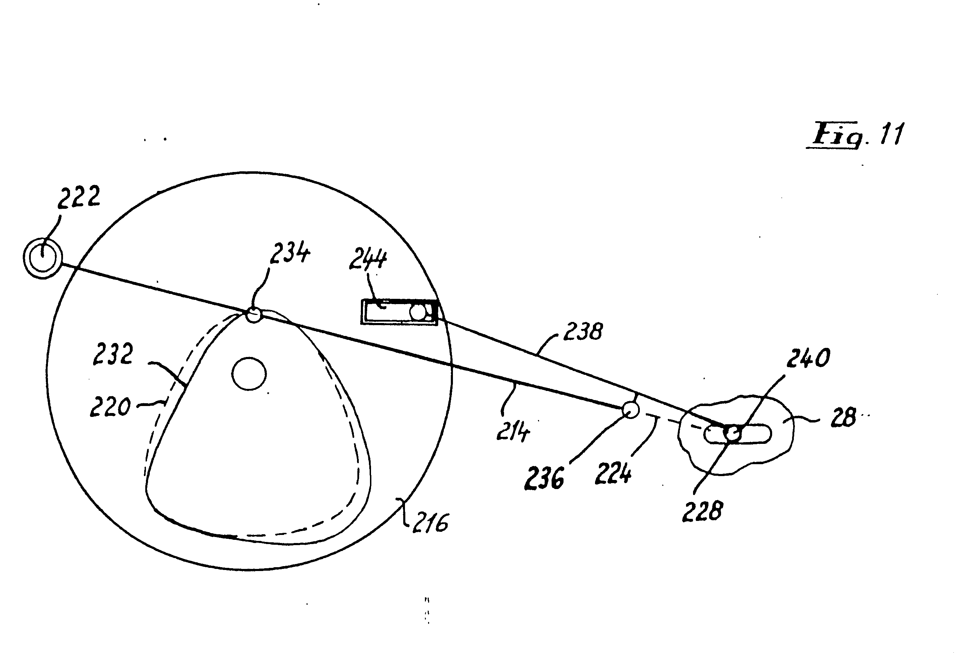

Fig. 11    die geschlossene Blasformschließeinheit in ihrer
           abgesenkten Stellung,

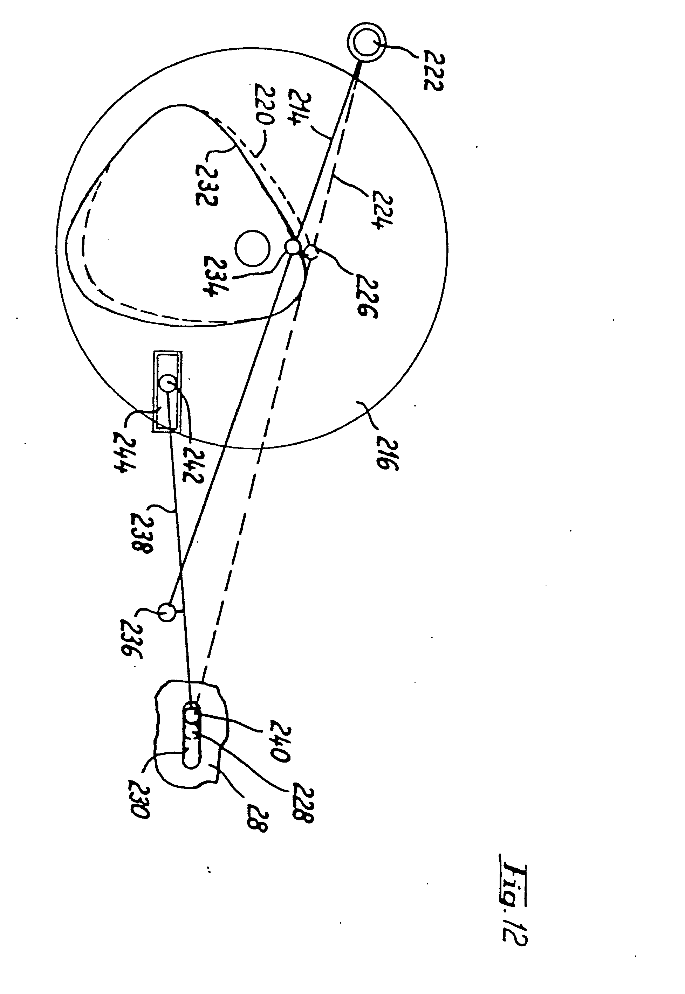

Fig. 12    die Blasformschließeinheit in abgesenkter
           Stellung, jedoch geöffnet und

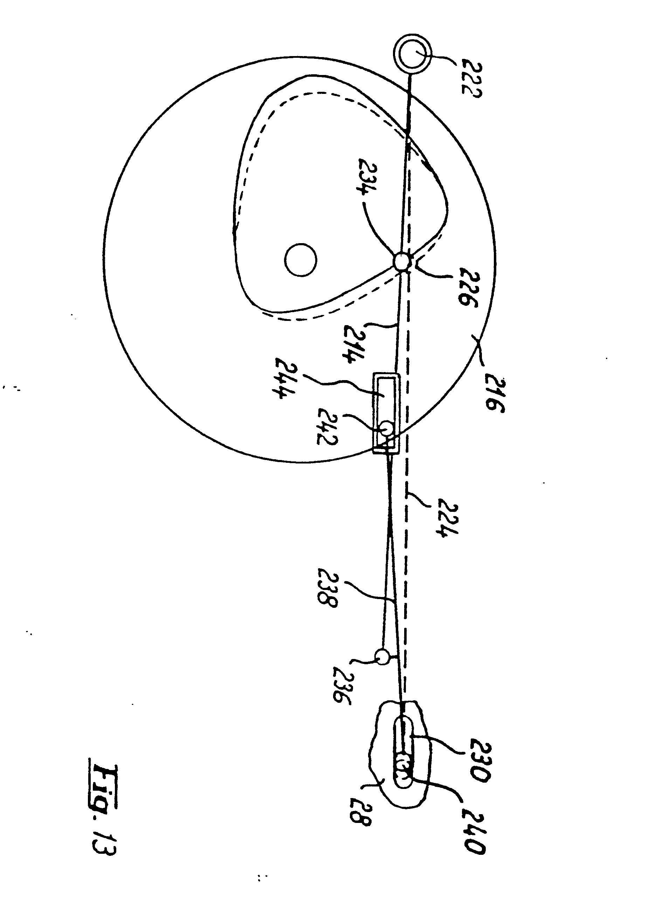

Fig. 13    die Blasformschließeinheit in einer der Fig. 10
           entsprechenden Stellung, jedoch während der
           Hubbewegung in geöffnetem Zustand.

In Fig. 1 ist eine Blasformschließeinheit 10 gezeigt,
die auf einem längs einer Schrägführung 12 zwischen einer
oberen, in unterbrochenen Linien dargestellten Schlauchübernahmepositon und einer unteren, in vollen Linien dargestellten Blasposition beweglichen Schlitten 13 angeordnet ist. In Anbetracht der vertikalen Bewegungskomponente
wird diese Bewegung der Einfachheit halber als "Hubbewegung"
bezeichnet.

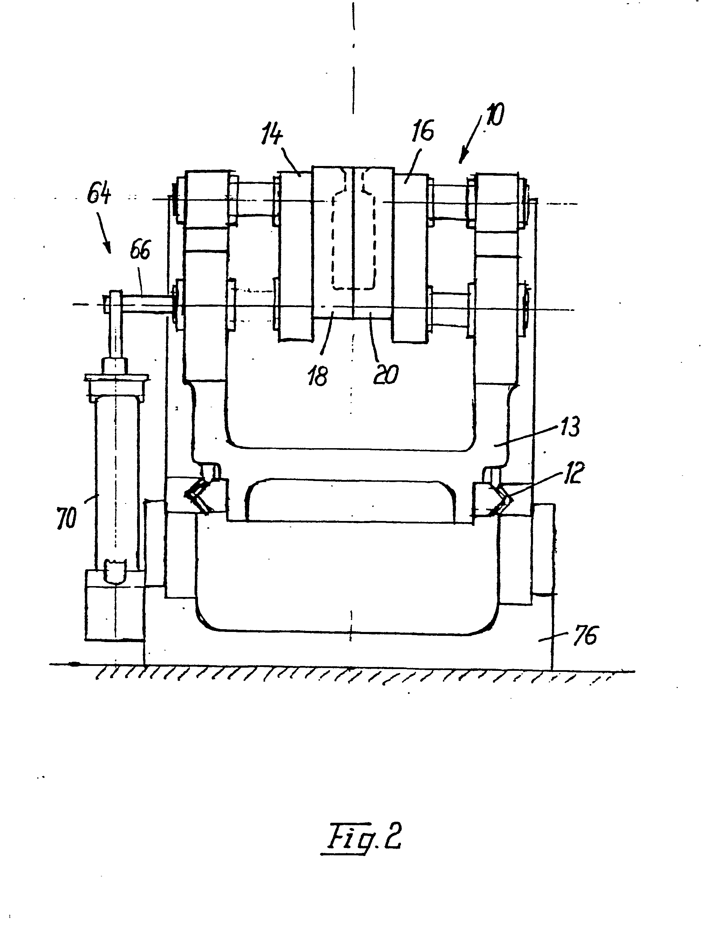

Die Blasformschließeinheit 10 besitzt zwei Formträger 14 und
16 (Fig. 2) die jeweils eine Formhälfte 18a bzw. 18b tragen
und die auf horizontalen Führungen 22 und 23 durch einen an
sich bekannten und hier nicht näher dargestellten Antrieb
bewegbar sind, damit sie sich in der oberen Schlauchübernahmeposition um ein von einem Extruderkopf 24 extrudiertes
Schlauchstück schließen können.

Unmittelbar nach der Schlauchübernahme wird der Schlauch
durch eine geeignete Vorrichtung abgetrennt und die Blasformschließeinheit 10 wird in ihre untere Endstellung bewegt. Diese Bewegung geschieht durch einen insgesamt mit
26 bezeichneten Schwenktrieb.

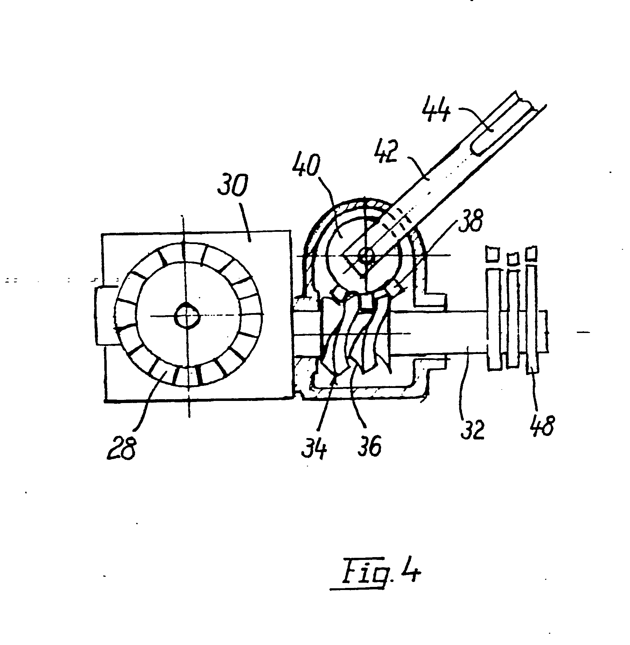

Dieser Schwenktrieb besteht aus einem tyristorgesteuerten, drehzahlgeregelten Gleichstrommotor 28, der über ein nur schematisch angedeutes Schneckengetriebe 30 eine Hauptantriebswelle 32 antreibt (Fig. 4). Auf der Hauptantriebswelle ist eine Kurvenwalze 34 mit einer in sich geschlossenen Antriebskurve 36 koaxial angeordnet, wobei diese Antriebskurve zwei Abschnitte mit gegenläufiger Steigung aufweist, zwischen welchen jeweils Abschnitte mit der Steigung Null eingefügt sind. In diese Antriebskurve 36 greifen die Rollen 38 eines Rollensterns 40 ein, dessen Achse rechtwinklig zur Achse der Hauptantriebswelle 32 verläuft. Der Rollenstern 40 ist drehfest mit einer Schwinge 42 verbunden, die an ihrem freien Ende einen Längsschlitz 44 aufweist, in den eine am Schlitten 13 angeordnete Mitnehmerrolle 46 eingreift.

Durch dieses Schwenkgetriebe wird der Schlitten 13 mit der Blasformschließeinheit 10 aus der unteren Blasposition mit einer mathematisch genau berechneten Beschleunigung bzw. abschließenden Verzögerung in die obere Schlauchübernahmeposition bewegt, worauf dann aufgrund des Kurvenabschnittes mit Steigung Null bei Fortsetzung der gleichförmigen Drehbewegung der Hauptantriebswelle 32 ein Stillstand des Schlittens 13 eintritt.

In dieser Stillstandsperiode wird die Blasformschließeinheit um den Schlauch geschlossen und der Schlauch abgetrennt. Anschließend wird mit entsprechend genau berechneter Beschleunigung und Verzögerung der Schlitten 13 in die untere Blasposition überführt, worauf der zweite Abschnitt mit Steigung Null innerhalb der Antriebskurve 36 für einen erneuten Stillstand des Schlittens 13 in der Blasposition sorgt. Während der Rollenstern 40 in dieser Stillstandsphase in die Antriebskurve 36 eingreift, dreht sich die Hauptantriebswelle 32 weiter, bis eine von mehreren auf der Hauptantriebswelle 32 drehfest angeordneten Kurvenscheiben 48 einen Endschalter betätigt, der den Motor 28 stillsetzt und zugleich eine Kupplungs-Brems-Kombination an sich bekannter und deshalb nicht näher dargestellter Bauform auslöst, die einen sofortigen Stillstand der Hauptantriebswelle 32 bewirkt, so daß seit dem Anlaufen der Hauptantriebswelle 32 die Hauptantriebswelle 32 eine Bewegung um genau $360^{\circ}$ durchgeführt hat. Zugleich wird ein Zeitglied betätigt, das entsprechend der gewünschten Kühlzeit einstellbar ist und das nach Ablauf der vorgegebenen Kühlzeit den Motor 28 wieder einschaltet, so daß die Hauptantriebswelle 32 erneut eine Antriebsperiode von $360^{\circ}$ durchlaufen kann.

Während der durch die Abschnitte mit Steigung Null der Antriebskurve 36 bedingten Zeitabschnitte, in welchen der Schlitten 13 in seiner oberen oder unteren Endstellung stillsteht, bewegt sich die Hauptantriebswelle 32 weiter, so daß durch die Kurvenscheiben 48 Nebenbewegungen gesteuert oder Schaltvorgänge, wie beispielsweise die Schnellentlüftung über den Blasdorn, eingeleitet werden können.

Es ist offensichtlich, daß auf der Hauptantriebswelle 32 weitere Antriebskurven vorgesehen werden können, durch welche Bewegungsabläufe gesteuert werden können, die synchron zur Bewegung des Schlittens 13 ablaufen sollen. Lediglich beispielsweise sei hier eine Transfereinrichtung zur positionierten Entnahme der Hohlkörper aus der Blasform und zur positionierten Weitergabe dieser Hohlkörper an Nachbehandlungseinrichtungen, wie beispielsweise eine Entgratstation und eine Station zur Dichtheitsprüfung erwähnt.

Zur Betätigung dieser positionierten Entnahme kann mit der Hauptantriebswelle 32 eine Kurvenscheibe 50 verbunden sein, die in ihrer Stirnfläche eine Hubkurve 52 besitzt, in die eine Rolle 54 eingreift, die auf einem Hebel 56 gelagert ist. Der Hebel 56 ist parallel zur Hauptantriebswelle 32 und damit zur Achse der Kurvenscheibe 50 verschwenkbar gelagert, trägt mit gewissem Abstand von der Lagerstelle 58 die Rolle 54 und mit wesentlich größerem Abstand von der Lagerstelle 58 eine weitere Rolle 60, die in einen Längsschlitz 62 eingreift, der mit einem in vertikaler Richtung beweglichen Greifer zur Entnahme der Hohlkörper aus der Blasform verbunden ist, dessen Konstruktion beliebig sein kann und der deshalb hier nicht näher dargestellt ist.

Eine solche Entnahme und Transfereinrichtung kann beispielsweise in der Art ausgebildet sein, daß der Greifer in den
Hohlkörper eingreift und sich dort spreizt, worauf nach dem
Öffnen der Blasform der Greifer in eine Zwischenstellung angehoben wird, in der er zum Stillstand kommt, worauf sich
eine Formmaske um den Hohlkörper schließt, die ihn anschließend
weiterbewegt. Nachdem sich die Formmaske geschlossen hat,
wird der Greifer nach oben aus dem Hohlkörper herausgezogen.

Um diese Bewegung durchzuführen, besitzt die Hubkurve 52
neben zwei Abschnitten mit gegenläufiger Steigung, die durch
jeweils einen Abschnitt mit der Steigung Null voneinander
getrennt sind, in dem Steigungsabschnitt, welcher der Aufwärtsbewegung dient einen weiteren Abschnitt mit der Steigung
Null, welcher den Stillstand des Greifers in der Zwischenposition zur Abgabe des Hohlkörpers an die Formmaske bewirkt.

Bei besonderen Produktionsaufgaben kann es erwünscht sein,
die Rastzeit der Blasformschließeinheit 10 in der oberen
Endstellung über die durch den Abschnitt mit Steigung Null
der Antriebskurve 36 für diese Rastzeit vorgegebene Dauer
auszudehnen. Dies ist ohne Beeinträchtigung der Vorteile
der Konstruktion auf einfache Weise durch eine weitere,
hierfür bestimmte Kurvenscheibe aus der Gruppe der Kurvenscheiben 48 möglich, die zur von einem einstellbaren Zeitglied abhängigen Unterbrechung der Antriebsperiode der
Hauptantriebswelle 32 so angeordnet ist, daß sie einen Endschalter und das genannte Zeitglied auslöst, bevor die
mit der Antriebskurve 36 in wirksamem Eingriff stehende
Rolle 38 des Rollensterns 40 den der oberen Rastzeit der
Blasformschließeinheit zugeordneten Abschnitt mit Steigung
Null der Antriebskurve 36 verläßt.

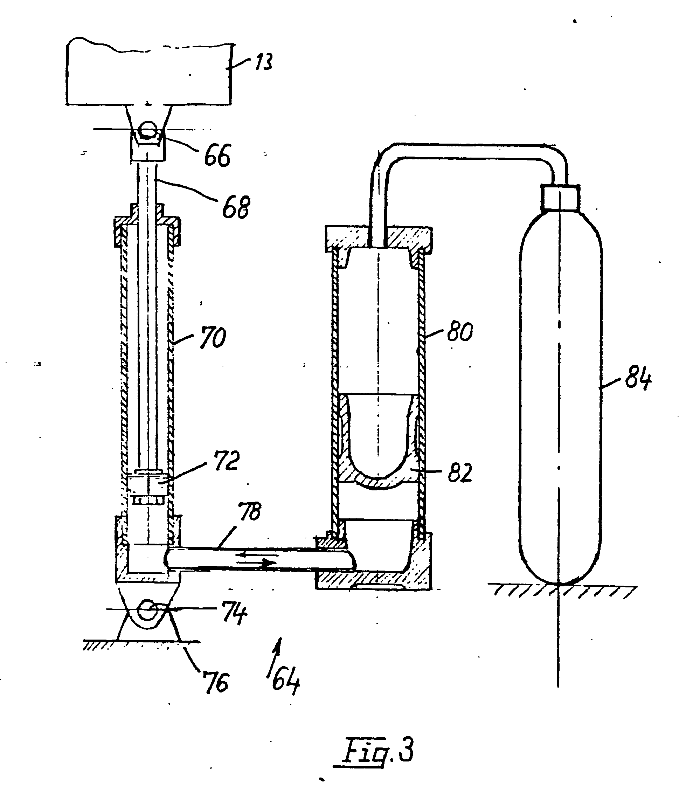

Die in Fig. 3 näher dargestellte, auch in Fig. 2 erkennbare
Gewichtsausgleichsvorrichtung ist insgesamt mit 64 bezeichnet
und besteht aus einer bei 66 am Schlitten gelenkig angreifenden Kolbenstange 68, die mit einem in einem Zylinder 70 verschieblichen Kolben 72 verbunden ist. Der Zylinder 70 ist
gelenkig bei 74 am Maschinensockel 76 befestigt. Auf der
von der Kolbenstange 68 abgewandten Seite wird der Kolben 72
von einer Drucköfüllung beaufschlagt, die über eine Verbindungsleitung 78 mit einem Druckgasspeicher 80 in Verbindung
steht; in diesem zylinderförmigen Druckgasspeicher 80 wird
ein Druckgaspolster durch einen schwimmend angeordneten
Kolben 82 vom Drucköl getrennt. Die Kolbenfläche des Kolbens
82 ist wesentlich größer als die Kolbenfläche des Kolbens 72,
so daß der Gegendruck des Druckgases über den gesamten Hub
des Kolbens 72 nur wenig verändert wird. Zur Ergänzung der
Druckgasfüllung ist mit dem Druckgasspeicher 80 eine Druckgasflasche 84 verbunden.

Die Fig. 6 zeigt eine andere Anordnung einer Blasformschließeinheit 110, welche mit zwei horizontal gegeneinander beweglichen Formträgern 114a und 114b versehen ist, deren
jeder eine Formhälfte 118a bzw. 118b aufnimmt. Die Blasformträger 114a und 114b werden beweglich von einer Führungskonsole 121 getragen, die über eine Vertikalführung 112 auf und ab beweglich gelagert ist, wobei diese Bewegung
in später noch erläuterter Weise von einem Kurventrieb abgeleitet wird.

Zur Entlastung des Kurventriebs und zur Einsparung von
Energie ist die Führungskonsole 121 über eine hydropneumatische Gewichtsausgleichsvorrichtung 164 abgestützt.

In der Führungskonsole 121 sind zwei vertikal übereinander
angeordnete, horizontal verlaufende Führungsholme 122 und
123 verschieblich gelagert, die mit dem Formträger 114a
verbunden sind und auf denen der Formträger 114b verschieblich gelagert ist. Hierzu ist jeder Formträger 114a
und 114b an seiner vom hier nicht gezeigten Blasdornschlitten abgewandten Seite mit jeweils einem oberen
Führungslager 125a bzw. 125b und zwei im Abstand voneinander
angeordneten unteren Führungslagern 127a und 129a bzw. 127b
und 129b versehen, wobei sich zur stabilen Abstützung der
beiden Formträger 114a und 114b die einander zugewandten
unteren Führungslager 129a bzw. 129b gegenseitig soweit
übergreifen, daß sie einen der Öffnungsbewegung der Formhälften 118a bzw. 118b entsprechenden Abstand voneinander
aufweisen. Zur Betätigung der Blasformschließeinheit 110
dient ein Stellgetriebe bestehend aus zwei Lenkern 131a
bzw. 131b, welche kniehebelartig auf die Blasformträger
114a und 114b einwirken können. Das Kniegelenk 135 zwischen
den beiden Lenkern 131a und 131b wird durch einen Block 137
mit zwei einzelnen Gelenkanschlüssen 139 und 141 gebildet,
der mit einer Führungsstange 143 in einer Führung 145 in
vertikaler Richtung beweglich geführt ist.

Zur Betätigung des Stellgetriebes dient ein Steuergetriebe
bestehend aus zwei Hebeln 212 und 214 und einer Kurvenscheibe 216, welche synchron mit einer Kurvenscheibe 218
umläuft, von welcher die Hub- und Senkbewegung der Blasformschließeinheit 110 abgeleitet wird. Vorzugsweise sind
beide Kurvenscheiben 216 und 218 zu einer einzigen, auf
beiden Stirnseiten je eine Kurvennut tragenden Scheibe
vereinigt, die auf der Hauptantriebswelle der Maschine
angebracht oder im Zwanglauf von dieser angetrieben ist.

Die Kurvenscheibe 218 ist in Fig. 7 deutlicher dargestellt,
so daß die in ihr angebrachte, dem Heben und Senken der
Blasformschließeinheit 110 dienende Kurve 220 erkennbar ist,
in die eine an einem einarmigen, bei 222 um eine horizontale
Achse drehbar gelegerten Hebel 224 angebrachte Rolle 226
eingreift. Am freien Ende des Hebels 224 ist eine weitere
Rolle 228 gelagert, die in eine horizontale Kulisse 230
an der Führungskonsole 28 eingreift. In Fig. 7 ist in vollen
Linien die Stellung bei angehobener Blasformschließeinheit
gezeigt, während in unterbrochenen Linien die abgesenkte
Stellung der Blasformschließeinheit nach einer Drehung der
Kurvenscheibe 218 um etwa 180$^{o}$ dargestellt ist.

In Fig. 8 ist die Kurvenscheibe 216 gezeigt, die konzentrisch zur Kurvenscheibe 218 angeordnet ist und synchron
zu dieser bewegt wird. Ein Hebel 214 des erwähnten Steuergetriebes ist ebenso wie der Hebel 224 einarmig ausgebildet und mit seinem einen Ende bei 222 um die gleiche
horizontale Achse schwenkbar gelagert wie der Hebel 224.
Der Hebel 214 trägt eine in die Kurvennut 232 der Kurvenscheibe 216 eingreifende Rolle 234. Mit größerem Abstand
von der Achse 222 als dem der Rolle 234, jedoch mit einem geringerem Abstand von der Achse 222 als der Länge des
Hebels 224 endet der Hebel 214 in einem Gelenkpunkt
236, an welchem ein zweiarmiger Hebel 238 um eine zur
Achse 222 parallele Achse mit dem Hebel 214 verbunden
ist.

Der zweiarmige Hebel 238 dient mit seinem einen Hebelarm
238a als Verlängerung des Hebels 214 bis zur Kulisse 230,
in welche eine am freien Ende des Hebelarms 238a angebrachte
Rolle 240 eingreift, die bei gestreckter Lage des Hebels
214 und des Hebelarms 238a konzentrisch zur Rolle 228 liegt,
wenn der Hebel 224 die gleiche Winkelstellung einnimmt.

Im Bereich des Gelenkpunkts 236 ist der Hebel 238 etwas
abgeknickt, so daß der dort beginnende zweite Hebelarm
238b mit dem Hebelarm 238a einen nach oben offenen stumpfen
Winkel bildet. Am freien Ende des Hebelrarms 238b ist eine
Rolle 242 gelagert, welche in eine Kulisse 244 am Block
202 eingreift.

Die Kurvennut 232 hat die Aufgabe, dem zweiarmigen Hebel
238 eine solche Position zu verleihen, daß über die Kulisse
244 das Kniehebel-Stellgetriebe 131a, 131b, 137 zu den jeweils auf die entsprechende Winkelstellung der Kurvenscheibe 218 für das Heben und Senken der Blasformschließeinheit 110 abgestimmten Zeitpunkten das Öffnen oder Schließen
der Blasformschließeinheit 110 erfolgt bzw. während den dazwischen liegenden Intervallen der geöffnete bzw. der geschlossene Zustand beibehalten wird.

Da die Lage des Hebels 238 einerseits durch die Position der Rolle 240 in der Kulisse 230 und andererseits durch die Position des Gelenkpunkts 236 bestimmt wird, und da die Lage der Kulisse 230 über den Hebel 224 von der Winkelstellung der Kulissenscheibe 218 abhängig ist, muß die Kurvennut 232 - solange der Öffnungs- oder Schließzustand der Blasformschließeinheit 110 nicht verändert werden soll, derart verlaufen, daß sich der Hebelarm 238a nur zu sich selbst parallel verschiebt, d.h., daß der Gelenkpunkt 236 seinen vertikalen Abstand gegenüber der Kulisse 230 nicht verändert, während die Blasformschließeinheit 110 und damit die Kulisse 230 sich in vertikaler Richtung bewegt.

Der zu diesem Zweck erforderliche Verlauf der Kurvennut 232 kann zu jedem Punkt der Kurvennut 220, d. h. zu jeder Position der Blasformschließeinheit 110 konstruktiv oder trigonometrisch ermittelt werden, es handelt sich dabei zunächst nur um einen ersten Anteil an der erforderlichen Bahn der Rolle 234. Der zweite Bahnanteil ergibt sich aus der Notwendigkeit, den Hebel 238 um den Gelenkpunkt 236 gegenüber sich selbst zu verschwenken, damit das Stellgetriebe 131a, 131b, 137 in Funktion tritt und die Blasformschließeinheit 110 in die Öffnungs- oder Schließstellung überführt. Dieser zweite Bahnanteil ergibt sich deutlich aus einem Vergleich der Fig. 10 und 13, weil dort die Blasformschließeinheit jeweils auf dem gleichen Niveau gezeigt ist, während sie in Fig. 10 geschlossen, in Fig. 13 dagegen offen ist. Zum besseren Vergleich ist in Fig. 10 die Stellung der Hebel 214 und 238 aus Fig. 13 in unter-

- 21 -

brochenen Linien eingetragen. Aus dem zur translatorischen
Parallelverschiebung des Hebels 238 erforderlichen Bahnanteil und dem zur Rotation des Hebels 238 erforderlichen
Bahnanteil ergibt sich der endgültige Verlauf der Kurvennut 232.

In Fig. 7 sind zum besseren Verständnis des kombinierten
Antriebs der Blasformschließeinheit 110 bestehend aus einem
Antrieb zum Heben und Senken über die Kurvenscheibe 218
und einem Antrieb zum Öffnen und Schließen über die Kurvenscheibe 216, beide Kurvenscheiben 216 und 218 als getrennte
Scheiben dargestellt, welche jeweils auf der nach vorn
weisenden Stirnfläche eine Kurvennut besitzen. Wie bereits
erwähnt wurde, kann vorzugsweise eine einzige Kurvenscheibe
verwendet werden, die auf beiden Strinflächen jeweils mit
einer der Kurvennuten 220 bzw. 232 versehen ist.

In Fig. 8 ist die Kurvenscheibe 218 mit der zum Heben und
Senken dienenden Kurvennut 220 gezeigt, wobei die in vollen
Linien dargestellte Position die obere Endstellung und die
in unterbrochenen Linien gezeigte Position der unteren Endstellung der Blasformschließeinheit 110 entspricht.

Aus Gründen der Übersichtlichkeit sind die einzelnen ausgewählten Positionen des durch die Kurvenscheibe 216 betätigten Steuergetriebes in gesonderten Figuren dargestellt.
Bei der aus Fig. 8 ersichtlichen Position überdecken sich
die Hebel 214 und 224. Der Hebel 224 wie auch die seine
Bewegung steuernde Kurvennut 220 sind in den Fig. 8-13 in
unterbrochenen Linien gezeigt.

Man erkennt aus den Fig. 8-13, daß die Kulissen 230 und 244 jeweils eine reine Vertikalbewegung durchführen, entsprechend der durch die Führung 112 erzwungenen Bewegung der Blasformschließeinheit 110 bzw. der Führungskonsole 121.

In den Figurenpaaren 8 und 9 sowie 11 und 12 stimmt die vertikale Position der Führungskonsole 121 jeweils überein, während die Kulisse 244 einmal entsprechend der Schließstellung der Blasformschließeinheit 110 angehoben und einmal entsprechend der Öffnungsstellung abgesenkt ist, da der Schließvorgang in der oberen Stellung der Blasformschließeinheit 110 stattfindet, während sie sich nach dem Blasvorgang in der unteren Position öffnet. Entsprechend ist die Blasform bei der Abwärtsbewegung geschlossen, bei der Aufwärtsbewegung dagegen geöffnet, wie aus den Figurenpaaren 10 und 13 ersichtlich ist, die beide eine Position der Blasformschließeinheit 110 in der Mitte ihrer vertikalen Bahn zeigen.

Zum Ausgleich etwa vorhandener Fertigungsungenauigkeiten bei den Hebellängen und der Kurvenform, wie auch zur Kompensation von Spiel in den Lagern wird einer oder werden beide Lenker 131a bzw. 131b des Stellgetriebes gegen ein Federelement, z.B. eine Tellerfeder abgestützt.

In der Zeichnung ist das Stellgetriebe zur Betätigung der Blasformschließeinheit 110 derart dargestellt, daß in geschlossenem Zustand die Lenker 131a und 131b einen relativ großen Winkel miteinander einschließen.

- 23 -

Dies ist aus Gründen der besseren Übersichtlichkeit geschehen. Zweckmäßigerweise wird man die Anordnung jedoch
so treffen, daß im geschlossenen Zustand der Blasformschließeinheit 110 die Lenker 131a und 131b annähernd einen Winkel
von 180$^{o}$ miteinander einschließen, d.h. nahezu fluchtend
zueinander ausgerichtet sind.

- 1 -

Dr. Ing. Walter Frohn

Geiselgasteigstrasse 100

D-8000 München 90

Bundesrepublik Deutschland

Maschine zur Herstellung geblasener Kunststoff-Hohlkörper.

Patentansprüche:

1. Maschine zur Herstellung geblasener Kunststoff-Hohlkörper mit einer Abgabevorrichtung für einen Vorformling, insbesondere zur Abgabe über einen Extruderkopf, mit einer durch einen Hubantrieb zwischen einer oberen, unterhalb der Abgabevorrichtung befindlichen Vorformling-Übergabeposition und einer unteren, gegenüber der Übergabeposition abgesenkten Blasposition bewegbaren Blasformschließeinheit, dadurch gekennzeichnet, daß eine Hauptantriebswelle (32) durch einen inter-

- 2 -

mittierenden Antrieb in einzelnen Antriebsperioden
mit jeweils exakt gleichem Drehwinkel antreibbar ist
und die Stillstandsphasen von einem einstellbaren
Zeitglied steuerbar sind, daß der Hubantrieb als im
Zwanglauf arbeitender, in sich geschlossener Kurventrieb (36, 38; 220, 226) ausgebildet und von der Hauptantriebswelle derart abgeleitet ist, daß während einer
Antriebsperiode der Hubantrieb seinen Zyklus einmal
vollendet, und daß die Kurve des Hubantriebs zwischen
den das Heben und Senken der Blasformschließeinheit
(10;110) bewirkenden Kurvenabschnitten gegenläufiger
Steigung jeweils Abschnitte mit der Steigung Null aufweist.

2. Maschine nach Anspruch 1, dadurch gekennzeichnet, daß
sie durch die Hauptantriebswelle (32) angetriebene
Kurvenscheiben (48) zur Steuerung von Nebenbewegungen
oder zur Einleitung von Schaltvorgängen besitzt.

3. Maschine nach einem der Ansprüche 1 oder 2, dadurch
gekennzeichnet, daß die Kurve (36; 220) des Hubantriebs
und/oder die Kurvenscheiben (48) auf der Hauptantriebswelle (32) angeordnet sind und der Drehwinkel der
Hauptantriebswelle während einer Antriebsperiode exakt
360$^{o}$ beträgt.

4. Maschine nach Anspruch 1, dadurch gekennzeichnet, daß
das Gewicht der Blasformschließeinheit (10; 110) über
eine hydropneumatische Ausgleichsvorrichtung abgestützt ist.

5. Maschine nach Anspruch 1, dadurch gekennzeichnet, daß
der Hubantrieb als Schwenktrieb ausgebildet ist, dessen
Schwinge (42; 224) mit der Blasformschließeinheit (10;
110) verbunden ist.

6. Maschine nach Anspruch 1, dadurch gekennzeichnet, daß
einer gemeinsam mit der Hauptantriebswelle (32) umlaufenden Kurvenscheibe (48) ein Endschalter zur Abschaltung des intermittierenden Antriebs der Hauptantriebswelle (32) und zur Auslösung eines Zeitglieds
derart zugeordnet ist, daß der Schaltvorgang erfolgt,
bevor der Hubantrieb den zwischen den Kurvenabschnitten
für Senken und Heben angeordneten, der unteren Stellung
der Blasformschließeinheit (10; 110) zugeordneten Abschnitt mit der Steigung Null verläßt.

7. Maschine nach Anspruch 1, dadurch gekennzeichnet, daß
einer gemeinsam mit der Hauptantriebswelle (32) umlaufenden Kurvenscheibe (48) ein Endschalter zur Abschaltung des intermittierenden Antriebs der Hauptantriebswelle (32) und zur Auslösung eines Zeitglieds
derart zugeordnet ist, daß der Schaltvorgang die Antriebsperiode unterbricht, bevor der Hubantrieb den
zwischen den Kurvenabschnitten für Heben und Senken
angeordneten, der oberen Stellung der Blasformschließeinheit (10; 110) zugeordneten Abschnitt mit der Steigung Null verläßt.

8. Maschine nach einem der Ansprüche 6 oder 7, dadurch gekennzeichnet, daß durch den Endschalter eine Kupplungs-Brems-Kombination zur sofortigen Stillsetzung der Hauptantriebswelle (32) betätigt wird.

9. Maschine nach Anspruch 1, dadurch gekennzeichnet, daß weitere Kurventriebe zur Steuerung von Bewegungsabläufen der Maschine im Zwanglauf mit dem Hubantrieb (36, 38; 220, 226) verbunden sind.

10. Maschine nach Anspruch 9, dadurch gekennzeichnet, daß die Antriebskurven aller Kurventriebe auf der Hauptantriebswelle (32) angeordnet sind.

11. Maschine nach Anspruch 9, dadurch gekennzeichnet, daß eine zweite Kurve (232) synchron mit der Kurve (220) des Hubantriebs (224, 230) antreibbar ist, daß mit dieser zweiten Kurve (232) ein Steuergetriebe (214, 238, 230) für ein an der Blasformschließeinheit (110) angeordnetes Stellgetriebe (131a,131b,137,143,145) zum Öffnen und Schließen der Blasform (118a, 118b) in Eingriff steht, daß die beiden Kurven (220, 232) derart aufeinander und auf das Steuergetriebe (214,238,230) abgestimmt sind, daß die Abgangseite (242) des Steuergetriebes auf einer Bahn geführt ist, die sich aus einem ersten, mit der Hubbewegung der Blasformschließeinheit (110) übereinstimmenden, in Bezug auf die Betätigung des Stellgetriebes (131a,131b,137,143,145) neutralen Anteil und einem zweiten, diesen ersten Anteil überlagernden, das Stellgetriebe (131a,131b,137, 143, 145) entsprechend den gewünschten Öffnungs- und Schließpunkten synchron zur Hubbewegung steuernden Anteil zusammensetzt, und daß zwischen dem Stellgetriebe (131a,131b,137,143,145) und der Hauptantriebswelle über das Steuergetriebe (214,238,230) und die zweite Kurve (232) eine Zwanglaufverbindung besteht.

12. Maschine nach Anspruch 11, dadurch gekennzeichnet, daß die Kurve (220) des Hubantriebs (224, 230) und die zweite Kurve (232) jeweils auf einer Stirnseite einer gemeinsamen Kurvenscheibe ausgebildet sind.

13. Maschine nach Anspruch 11, dadurch gekennzeichnet, daß das Steuergetriebe aus einem Hebel (214) besteht, welcher in einem ersten Abstand von seinem Drehpunkt (222) mit der zweiten Kurve (232) in Eingriff steht und in einem zweiten Abstand von seinem Drehpunkt (222) gelenkig mit einem Lenker (238) verbunden ist, der einerseits an der Blasformschließeinheit (110) gelagert, andererseits mit dem Eingang (137) des Stellgetriebes (131a,131b,137,143,145) verbunden ist, und daß der erste Kurvenanteil der zweiten Kurve (232) derart verläuft, daß der Gelenkpunkt (236) zwischen dem Hebel (214) und dem Lenker (238) eine Bewegung parallel zur Hub- und Senkbewegung der Blasformschließeinheit (110) durchführt, während der zweite, diesem ersten Anteil überlagerte Kurvenanteil auf diesen Gelenkpunkt (236) eine Bewegung überträgt, welche den Eingang (137) des Stellgetriebes        synchron zu den bezogen auf die Kurve (220) des Hubantriebs festgelegten Öffnungs- und Schließzeitpunkten in die Öffnungs- bzw. Schließstellung überführt.

14. Maschine nach Anspruch 13, dadurch gekennzeichnet, daß der Hubantrieb über einen Schwinghebel (224) erfolgt, der koaxial mit dem in die Kurvenscheibe (216) eingreifenden Hebel (214) des Steuergetriebes (214, 238, 230) gelagert ist, und daß beide Kurvenscheiben (216, 218) ebenfalls koaxial zueinander angeordnet sind.

15. Maschine nach Anspruch 12, dadurch gekennzeichnet, daß die Kurvenscheibe aus zwei zu gemeinsamer Drehbewegung fest zusammengefügten, jeweils eine Kurvennut (220, 232) aufweisenden Teilstücken besteht.

16. Maschine nach den Ansprüchen 9 oder 10, dadurch gekennzeichnet, daß zum Antrieb einer in zwei Bewegungsschritten arbeitenden Vorrichtung zur Entnahme der Hohlkörper aus der Blasform (18a,18b;118,118b) eine Kurvenscheibe (50) vorgesehen ist, die von zwei Abschnitten mit der Steigung Null getrennt einen der Entnahmebewegung zugeordneten Steigungsabschnitt besitzt, und daß der der Entnahmebewegung zugeordnete Steigungsabschnitt von einem weiteren Abschnitt mit der Steigung Null unterbrochen ist.

Fig. 1

*Fig.*2

0033489

*Fig.3*

*Fig. 4*

_Fig_.5a

_Fig_.5b

Fig.6

**Fig.7**

0033489

Fig. 8

0033489

Fig. 9

0033489

**Fig.10**

222

232
220

234

244

216

214

236
224

238

228

240

28

**Fig. 11**

0033489

Fig.12

Fig. 13

<table>
<tr><td>Europäisches Patentamt</td><td>**EUROPÄISCHER RECHERCHENBERICHT**</td><td>Nummer der Anmeldung<br>EP 81 10 0465</td></tr>
</table>

| | EINSCHLÄGIGE DOKUMENTE | | KLASSIFIKATION DER ANMELDUNG (Int Cl ³) |
|---|---|---|---|
| Kategorie | Kennzeichnung des Dokuments mit Angabe, soweit erforderlich, der maßgeblichen Teile | betrifft Anspruch | B 29 C 17/07 |
| X | DE - A - 2 204 395 (KAUTEX WERKE)<br>* Insgesamt * | 1-3,6 7,9- 11,16 | |
| | -- | | |
| | DE - A - 2 212 077 (NABENFABRIK A. KESSLER)<br>* Insgesamt * | 1-5,9 10 | |
| | -- | | |
| | DE - A - 2 024 802 (OWENS-ILLINOIS)<br>* Insgesamt * | 1-3,5 9,10 | |
| | -- | | RECHERCHIERTE SACHGEBIETE (Int Cl ) |
| | DE - A - 2 401 347 (E. KORSCH)<br>* Insgesamt * | 1 | B 29 C |
| | -- | | |
| A | US - A - 2 175 054 (E. FERNGREN) | | |
| A | US - A - 3 449 481 (HIDEO TAHARA) | | |
| A | FR - A - 1 247 323 (L. KRAFFE DE LAUBAREDE) | | |
| | ---- | | |

KATEGORIE DER GENANNTEN DOKUMENTE

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patent-familie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 27-04-1981 | LABEEUW |

EPA form 1503.1  06.78